# EUROPEAN PATENT SPECIFICATION

(11) **EP 4 051 737 B1**
(45) Date of publication and mention of the grant of the patent: **16.08.2023**
(21) Application number: 20817536.4
(22) Date of filing: 28.10.2020
(51) Int. Cl.: C08L 97/00, C08L 23/00, C08L 23/06

(54) **WOOD POLYMER COMPOSITES AND ADDITIVE SYSTEMS THEREFOR**
HOLZ POLYMER ZUSAMMENSETZUNGEN UND BINDEMITTELSYSTEME DAFÜR
COMPOSITES DE POLYMÈRE ET BOIS ET SYSTÈMES ADDITIFS

(30) Priority: 28.10.2019 US 201962926889 P
(43) Date of publication of application: 07.09.2022
(73) Proprietor: Struktol Company of America, LLC, Stow, Ohio 44224-0649 (US)
(72) Inventor: CHUN, Iksoo, Stow, Ohio 44224 (US); KATAPHINAN, Woraphon, Akron, Ohio 44313 (US); MIKOLAY, Mike, Macedonia, Ohio 44056 (US); BRDARSKI, Zoran, Copley, Ohio 44321 (US); KENNEDY, Hollie, Hudson, Ohio 44236 (US)
(74) Representative: Brand Murray Fuller LLP
(86) International application number: PCT/US2020/057752
(87) International publication number: WO 2021/086974

(56) References cited:
- WO-A1-2010/023054
- WO-A2-2008/079784
- BORAH JYOTI SANKAR ET AL: "Recent development in thermoplastic/wood composites and nanocomposites: A review", KOREAN JOURNAL OF CHEMICAL ENGINEERING, SPRINGER NEW YORK LLC, US, KR, vol. 33, no. 11, 19 July 2016 (2016-07-19) , pages 3035-3049, XP036093521, ISSN: 0256-1115, DOI: 10.1007/S11814-016-0183-6 [retrieved on 2016-07-19]
- GRUBBSTROM G ET AL: "Silane-crosslinking of recycled low-density polyethylene/wood composites", COMPOSITES PART A: APPLIED SCIENCE AND MANUFACTURING, ELSEVIER, AMSTERDAM, NL, vol. 41, no. 5, 1 May 2010 (2010-05-01), pages 678-683, XP026954171, ISSN: 1359-835X [retrieved on 2010-02-04]
- YEO JUN-SEOK ET AL: "Preparation and characteristics of polypropylene- graft -maleic anhydride anchored micro-fibriled cellulose: its composites with polypropylene", JOURNAL OF ADHESION SCIENCE AND TECHNOLOGY, vol. 29, no. 3, 19 November 2014 (2014-11-19), pages 185-194, XP55775398, GB ISSN: 0169-4243, DOI: 10.1080/01694243.2014.980632 Retrieved from the Internet: URL:https://www.tandfonline.com/doi/pdf/10 .1080/01694243.2014.980632?needAccess=true >

## Description

### Technical Field

The present invention relates to wood polymer composites and in particular to additive systems for use in wood polymer composites.

### Background

Wood-polymer composites (WPC) including thermoplastic resins and cellulosic filler materials such as wood flour have been conventionally known. WPCs are generally formed by melt mixing thermoplastic resins, cellulosic materials and additives followed by extrusion molding to form "synthetic lumber" and other all-wood replacement products. WPCs are processed into various shapes. Accordingly, they are widely used to replace traditional wood products including building materials such as doors, frames, window casings and the like, and for exterior applications such as decking, fencing and the like. WPCs offer the advantages over all-wood products, such as flame resistance, resistance to rot and insect attack and deterioration due to the effects of moisture and UV light.

### Summary

As described herein, the present invention is directed to the use of amine compounds as additives to improve physical properties of wood polymer composites.

In one aspect, there is provided an additive system for wood polymer composites that includes: at least one maleic anhydride grafted polymer coupling agent; at least one coupling agent selected from silanes and siloxanes; at least one peroxide crosslinking agent; and an amine compound.

In one embodiment, the amine compound of the additive is selected from among amine functionalized compounds, aliphatic amines, and aromatic amines. Such amine compounds include aliphatic diamines and aromatic diamines, primary amines, secondary amines and tertiary amines. Non-limiting examples include ethylenediamine, diethylenetriamine, trimethylenediamine, tetramethylenediamine, triethylene tetramine, tris(2-aminoethyl)amine, triethylenetetramine, pentamethylenediamine, hexamethyldiamine, heptamethylenediamine, octamethylenediamine, nonamethylenediamine, dodecamethylenediamine, undecanediamine, aminoethylpiperazine (AEP), N,N'-Bis-(2-aminoethyl)piperazine) (bis-AEP), N-[(2-aminoethyl)2-aminoethyl]piperazine) or piperazinoethylethylenediamine (PEEDA), polyethyleneamine, melamine (2,4,6-triamino-1 ,3,5-triazine), urea, amine functionalized silane and siloxane, fatty amines, and combinations of two or more thereof.

In one embodiment, the polymer of the maleic anhydride grafted polymer coupling agent is selected from among polystyrene copolymers, polyvinyl chloride, polyacrylate, polyurethane, ethylene vinyl acetate, polyester, styrene-ethylene-butylene-styrene (SEBS), ethylene propylene diene monomer (EPDM), and copolymers thereof.

In one embodiment, the second coupling agent is selected from among amino silane, epoxy silane, vinyl silane, methacryloxy silane, mercaptosilane, vinyl terminated polyalkylsiloxane, vinyl terminated polyarylsiloxane, polyalkyl siloxane, and polyarylsiloxane.

In one aspect, there is provided a wood polymer composite that includes: at least one thermoplastic polymer; a cellulosic fiber material; and an additive system including at least one maleic anhydride grafted polymer coupling agent; at least one coupling agent selected from silanes and siloxanes; at least one peroxide crosslinking agent; and an amine compound.

In one embodiment, the thermoplastic polymer of the wood polymer composite may be selected from among polyamides, polyesters, polystyrenes, polycarbonates, polyvinylchloride, polyurethane, polyethers, polyolefins, and copolymers thereof. In a preferred embodiment, the thermoplastic polymer comprises a polyolefin. In one embodiment, the thermoplastic polymer includes recycled polymeric material.

In one embodiment, the wood polymer composite further includes at least one lubricant. The lubricant may be a metal-containing lubricant or a non-metal containing lubricant. The lubricant may be selected from among polymer waxes, zinc stearate, calcium stearate, magnesium stearate, potassium stearate, sodium stearate, ethylene bis stearamide, ethylene bis cocoamide, oleamide, erucamide, stearamide, ethylene bis lauramide, pentaerythiritol adipate stearate, and mixtures of two or more thereof. The lubricant may be a solid lubricant selected from among graphene, graphite and boron.

In one aspect there is provided a formed article comprising a wood polymer composite that includes at least one thermoplastic polymer; a cellulosic fiber material; and an additive system including at least one maleic anhydride grafted polymer coupling agent; at least one coupling agent selected from silanes and siloxanes; at least one peroxide crosslinking agent; and an amine compound. The formed article may be formed by at least one of extrusion, injection molding, compression molding, thermo forming and roto-molding.

In one aspect there is provided a method of making a wood polymer composite article, the method including the steps of i) providing an additive system that includes at least one maleic anhydride grafted polymer coupling agent; at least one coupling agent selected from silanes and siloxanes; at least one peroxide crosslinking agent; and an amine compound, ii) melt mixing a cellulosic material, at least one thermoplastic polymeric material and the additive system at a temperature sufficient to flow the thermoplastic polymeric material, and iii) extruding through a die the wood polymer composite.

### Detailed Description

The inventors herein have developed additives to improve flex properties of WPC, especially modulus of rupture (MOR). Several coupling agents such as silanes, siloxanes, and maleic anhydride grafted polymers (MAH), in particular maleic anhydride grafted polyolefin coupling agents, were evaluated. These coupling agents generally improved flex properties, e.g., load at yield, modulus of rupture, flexural modulus (MOE) of WPC. However, the improvement was not sufficient or consistent, especially MOR. The inventors discovered that adding an amine compound into a WPC formulation having a graft copolymer MAH, silane and/or siloxane, and peroxide surprisingly enhanced MOR. The amine compound acts as a reinforcement agent so that the reactions of MAH, silane, siloxane, polyethylene, and wood flour were increased.

The wood polymer composite (WPC) in which the additive is used may include a blend of cellulosic material and a thermoplastic polymeric resin. In one embodiment, WPC may comprise one or more thermoplastic polymers, such as, for example, polyamides, polyesters, polystyrenes, polycarbonates, polyolefins, such as high-density polyethylene (HDPE), low density polyethylene (LDPE), linear low-density polyethylene (LLDPE), ultrahigh molecular weight polyethylene (UHMWPE), ultra-low-density polyethylene (ULDPE), copolymers of ethylene and a second a-olefin monomer including metallocene polyethylene (MPE), ethylene/propylene copolymers, terpolymers, such as ethylene propylene diene monomer (EPDM), and polypropylene homo- and copolymers. Such thermoplastic polymers may also include polymers and copolymers, such as polyvinyl chloride, polyvinyl chloride vinyl acetate copolymers, polyvinyl chloride n-butyl acrylate copolymers, chlorinated polyvinyl chloride, polyurethanes, and polyethers. In addition, for economic and environmental reasons, recycled plastics such as recycled LDPE, recycled HDPE, recycled PP may also be used. For example, regrinds of HDPE from bottles and films may be used.

The cellulosic filler material may be derived from any cellulose source, including wood/forest and agricultural by-products. Thus, the cellulosic filler material may comprise, for example, hard wood fiber, soft wood fiber, hemp, jute, rice hulls, wheat straw, and combinations of two or more of these. Suitable wood products include fibers or flours of woods including oak, pine, poplar, beeches, aspen, cedar, cottonwood, maple, apple, cherry, mahogany, spruces, firs, and other woods. The form of the cellulosic materials from wood sources may be sawdust, wood chips, wood flour, or the like.

The WPC may additionally comprise conventional additives including plasticizers, compatibilizers or coupling agents, flexomers, stabilizers, including viscosity stabilizers and hydrolytic stabilizers, antioxidants, ultraviolet ray absorbers, anti-static agents, dyes, pigments or other coloring agents, inorganic fillers, fire-retardants, lubricants, reinforcing agents, such as glass fiber and flakes, foaming or blowing agents, processing aids, antiblock agents, release agents, pest repellants, and/or mixtures thereof.

Inorganic fillers may be included in the cellulosic filler material. Examples of suitable inorganic fillers include talc, mica, kaolin, calcium carbonate, sodium carbonate, barium sulfate, zeolite, fly ash, clay, zinc borate, sodium borate, sodium tetraborate, potassium carbonate, glass fibers, carbon fibers, and combinations thereof.

The WPC may contain one or more lubricants. Lubricants are particularly suitable for applications where the WPC is processed by extrusion, injection molding, compression molding, vacuum forming, roto-molding, thermo molding or other processing techniques. Lubricants are used for improving processing which include reducing process torque, pressure, and temperature during the extrusion process resulting in increased throughput, improved dispersion, and eliminating edge tear on the WPC surface.

Examples of such lubricants include polymer waxes, metal stearates such as zinc stearate, calcium stearate, magnesium stearate, potassium stearate and sodium stearate, stearic acid derivatives including ethylene bis stearamide, ethylene bis cocoamide, oleamide, erucamide, stearamide, ethylene bis lauramide and esters such as pentaerythiritol adipate stearate, and mixtures of two or more thereof. In WPC formulations containing polyolefins, ethylene bis stearamide (EBS) and metal soaps or non-metal soaps may be used. The lubricant may be a solid lubricant, such as graphene, graphite and/or boron. In one embodiment, the WPC composition contains less than 10% by weight of lubricant.

A coupling agent is a compound capable of reacting with and binding to both a reinforcing filler and a resin matrix of a composite material. Polyolefins are generally non-polar, while cellulosic fibers are polar, owing to the presence of hydroxyl groups on cellulose units. Suitable coupling agents contain both polar and non-polar moieties. Useful coupling agents herein include modified polyolefins, depending on the thermoplastic material used in the wood polymer blend. A modified polyethylene is typically used in a polyethylene-wood composite; while a modified polypropylene is typically used in a polypropylene-wood composite.

Coupling agents may include maleic anhydride graft copolymers. Maleic anhydride-grafted polymers (maleated polymers) are polymeric materials in which maleic anhydride is reacted with an existing polymer, often under free-radical conditions, to form anhydride groups appended to the polymer chain. They include maleic anhydride grafted polyethylene, maleic anhydride grafted polypropylene, maleic anhydride grafted styrene-ethylene-butene-styrene triblock copolymer, maleic anhydride grafted polybutadiene, maleic anhydride grafted polyvinyl chloride, maleic anhydride grafted polyacrylate, maleic anhydride grafted polyurethane, maleic anhydride grafted ethylene vinyl acetate, maleic anhydride grafted polyester, maleic anhydride grafted ethylene propylene diene monomer (EPDM), and copolymers thereof.

In addition to a maleic anhydride graft copolymer coupling agent, the WPC additive may include a second coupling agent that is a silane or siloxane coupling agent. Examples of such coupling agents include amino silane, epoxy silane, vinyl silane, methacryloxy silane, mercaptosilane, vinyltrimethoxysilane, vinyl-triethoxysilane, vinyl tris(β-methoxyethoxy)silane, vinyltriacetylsilane, γ-methacryloxypropyltrimethoxysilane, β-(3,4-epoxycyclohexyl)ethylmethoxysilane, γ-glucidoxypropyltrimethoxsilane, γ-glucidoxypropylmethyldimethoxysilane, γ-glucidoxypropylmethyldiethoxysilane, γ-glucidoxypropylethyldimethoxysilane, γ-glucidoxypropylethyldiethoxysilane, N-β-(aminoethyl)aminopropyltrimethoxysilane, N-β-(aminoethyl)aminopropyltriethoxysilane, N-β-(aminoethyl)aminopropylmethyldimethoxysilane, N-β-(aminoethyl)aminopropylethyldimethoxysilane, N-β-(aminoethyl)-aminopropylethyldiethoxysilane, γ-aminopropyltriethoxysilane, N-phenyl-γ-aminopropyltrimethoxysilane, γ-(N-(β-methacryloxyethyl)-N,N-dimethylammonium-(chloride))propylmethoxysilane, γ-mercaptopropyltrimethoxysilane, γ-mercaptopropyltriethoxysilane, vinyl terminated polyalkylsiloxane, vinyl terminated polyarylsiloxane, polyalkyl siloxane, and polyarylsiloxane.

The inventors herein have discovered that adding an amine compound into a WPC formulation having a grafted copolymer MAH, silane or siloxane coupling agent, and peroxide surprisingly enhanced MOR. Amine compounding worked as an additive agent so that the reactions of MAH, silane, siloxane, polyethylene, and wood flour were increased.

Suitable amine compounds include, for example, amine compounds and amine functionalized compounds, including, aliphatic and aromatic amines, ethylenediamine, diethylenetriamine, trimethylenediamine, tetramethylenediamine, triethylene tetramine, tris(2-aminoethyl)amine, triethylenetetramine, pentamethylenediamine, hexamethyldiamine, heptamethylenediamine, octamethylenediamine, nonamethylenediamine, dodecamethylenediamine, undecanediamine, aminoethylpiperazine (AEP), N,N'-Bis-(2-aminoethyl)piperazine) (bis-AEP), N-[(2-Aminoethyl)2-aminoethyl]piperazine), piperazinoethylethylenediamine (PEEDA), polyethyleneamine, polyamines, melamine (2,4,6-triamino-1 ,3,5-triazine), urea, amine functionalized silane and siloxane, fatty amines, and combinations of two or more thereof.

Graft copolymer MAHs, peroxide and/or silane coupling agents have been commonly used to improve physical properties of WPC. However, they did not provide sufficient and/or consistent physical properties. Incorporating an amine compound with a formulation that included MAH, silane and dicumyl peroxide (DCP) enhanced the physical properties of the WPC further, especially MOR. The amine compound worked to improve the reinforcement of the WPC material.

An additive system of the present disclosure includes at least one amine compound, at least one maleic anhydride grafted polymer coupling agent, a least one silane or siloxane coupling agent and at least one peroxide crosslinking agent.

The new additives can be used for enhancing physical properties of the plastic products. Products can be WPC, automobile, indoor/outdoor applications, filled compounds, wire/cable, fiber, any plastic application where reinforcement/enhancing physical properties is needed.

In one embodiment of the invention, the wood polymer composite includes: 20-80% by weight of the at least one thermoplastic polymer; 20-80% by weight of cellulosic material; and 0.1-10% by weight of the additive system including a maleic anhydride grafted polymer coupling agent, a silane or siloxane coupling agent, a peroxide crosslinking agent and an amine.

In one embodiment of the invention, the wood polymer composite of includes: 20-75% by weight of the at least one thermoplastic polymer; 20-75% by weight of cellulosic material; 0.2-10% by weight of the at least one lubricant; and 0.1-10% by weight of the additive system including a maleic anhydride grafted polymer coupling agent, a silane or siloxane coupling agent, a peroxide crosslinking agent and an amine.

### EXAMPLES

### Group A - Examples 1-5: High density polyethylene and non-metal lubricant.

The WPC formulations were of Table 1 were extruded using a Leistritz 27mm twin screw extruder. Temperature profiles, feed rate, and screw speed were set for 170°C in all 9 zones, 5kg/hr and 80RPM, respectively. All extruded samples were compressed molded using a Carver Laboratory Press at 200 °C. Three point bending test was performed using a Instron (Instron 4201) to measure flex properties. Span distance and head speed were 2inch and 0.5 inch/min, respectively. The amounts given in Table 1 are parts by weight. Example 1 is the control and Examples 2 and 3 are comparative examples.

**Table 1**

| | Control 1 | 2 | 3 | 4 | 5 |
|---|---|---|---|---|---|
| Wood flour | 50 | 50 | 50 | 50 | 50 |
| HDPE | 30 | 30 | 30 | 30 | 30 |
| Inorganic filler | 15 | 15 | 15 | 15 | 15 |
| Non-metal Lubricant | 5 | 5 | 5 | 5 | 5 |
| Maleic anhydride grafted polyolefin | | 1 | 1 | 1 | 1 |
| Organosilane+ Dicumyl peroxide | | | 0.14 | 0.14 | 0.14 |
| Melamine | | | | 1 | |
| Urea | | | | | 0.5 |

**Table 2**

| Test | Ex. 1 | Ex. 2 | Ex. 3 | Ex. 4 | Ex. 5 |
|---|---|---|---|---|---|
| Load @ yield (Ib) | 32.5 | 35.5 | 48.8 | 52.9 | 51.4 |
| Modulus of Rupture (MOR, psi) | 4433 | 5333 | 5669 | 6157 | 6118 |
| Modulus of Elongation (MOE, psi) | 713000 | 751000 | 576000 | 671000 | 699000 |

As shown in Table 2, MORs of inventive Examples 4 and 5 were 35% higher than that of Example 1 (control) that does not contain coupling agents and even 8% higher than that of Comparative Example 3.

### Group B - Examples 6-9: High density polyethylene and a metal-containing lubricant.

The WPC formulations were extruded using a Leistritz 27mm twin screw extruder. Temperature profiles, feed rate, and screw speed were set for 170°C in all 9 Zones, 5kg/hr and 80RPM, respectively. All extruded samples were compressed molded using a Carver Laboratory Press at 200 °C. Three point bending test was performed using a Instron (Instron 4201) to measure flex properties. Span distance and head speed were 2inch and 0.5 inch/min, respectively. The amounts given in Table 3 are parts by weight. Example 6 is the control and Examples 7 and 8 are comparative examples.

**Table 3**

| | Examples | | | |
|---|---|---|---|---|
| Components | Control 6 | 7 | 8 | 9 |
| Wood flour | 50 | 50 | 50 | 50 |
| HDPE | 30 | 30 | 30 | 30 |
| Inorganic filler | 15 | 15 | 15 | 15 |
| Metal Lubricant | 5 | 5 | 5 | 5 |
| Maleic anhydride grafted polyolefin | | 1 | 1 | 1 |
| Organosilane + Dicumyl peroxide | | | 0.14 | 0.14 |
| Urea | | | | 0.5 |

**Table 4**

| Test | Ex. 6 | Ex. 7 | Ex. 8 | Ex. 9 |
|---|---|---|---|---|
| Load @ yield (Ib) | 39.6 | 40.8 | 44.8 | 49.7 |
| Modulus of Rupture (MOR, psi) | 5221 | 5353 | 5726 | 6142 |
| Modulus of Elongation (MOE,(psi) | 833000 | 820000 | 829000 | 784000 |

As can be seen in Table 4, MOR of Example 9 showed 17% enhancement compared to Control Example 6.

### Group C - Examples 10-12: Low density polyethylene and non-metal lubricant.

The WPC formulations were extruded using an Leistritz 27mm twin screw extruder. Temperature profiles, feed rate, and screw speed were set for 170°C in all 9 Zones, 5kg/hr and 80RPM, respectively. All extruded samples were compressed molded using a Carver Laboratory Press at 200 °C. Three point bending test was performed using a Instron (Instron 4201) to measure flex properties. Span distance and head speed were 2inch and 0.5 inch/min, respectively. The amounts given in Table 5 are parts by weight. Example 10 is the control and Example 11 is a comparative example.

**Table 5**

| | Examples | | |
|---|---|---|---|
| Components | Control 10 | 11 | 12 |
| Wood flour | 50 | 50 | 50 |
| LDPE | 30.5 | 30.5 | 30.5 |
| Inorganic filler | 15 | 15 | 15 |
| Non-metal lubricant | 4.5 | 4.5 | 4.5 |
| Maleic anhydride grafted polyolefin | | 2 | 2 |
| Organosilane + Dicumyl peroxide | | 0.14 | 0.14 |
| Melamine | | | 1 |

**Table 6**

| Test | Ex. 10 | Ex. 11 | Ex. 12 |
|---|---|---|---|
| Load @ yield (lb) | 18 | 22.2 | 27.4 |
| Modulus of Rupture (MOR, psi) | 2268 | 3447 | 3812 |
| Modulus of Elongation (MOE,psi) | 302000 | 361000 | 466000 |

As can be seen in Table 6, MOR of Example 12 showed 68% enhancement compared to Control Example 10.

### Group D - Examples 13-15: Water Absorption: High density polyethylene and non-metal lubricant.

The WPC formulations were extruded using a Leistritz 27mm twin screw extruder. Temperature profiles, feed rate, and screw speed were set for 170°C in all 9 Zones, 5kg/hr and 80RPM, respectively. All extruded samples were compressed molded using a Carver Laboratory Press at 200 °C. Three point bending test was performed using an Instron (Instron 4201) to measure flex properties. Span distance and head speed were 2 inch and 0.5 inch/min, respectively. The amounts given in Table 7 are parts by weight. Example 13 is the control and Example 14 is a comparative example.

**Table 7**

| | Examples | | |
|---|---|---|---|
| Component | Control 13 | 14 | 15 |
| Wood flour | 50 | 50 | 50 |
| HDPE | 30.5 | 30.5 | 30.5 |
| Inorganic filler | 15 | 15 | 15 |
| Non-metal Lubricant | 4.5 | 4.5 | 4.5 |
| Maleic anhydride grafted polyolefin | | 0.5 | 0.5 |
| Organosilane+ Dicumyl peroxide | | | 0.14 |
| Melamine | | | 0.15 |

**Table 8**

| Test | Ex. 13 | Ex. 14 | Ex. 15 |
|---|---|---|---|
| Load @ yield (Ib) | 33.7 | 40.4 | 51.4 |
| Modulus of Rupture (MOR, psi) | 4774 | 4938 | 6234 |
| Modulus of Elongation (MOE, psi) | 668K | 577K | 637K |

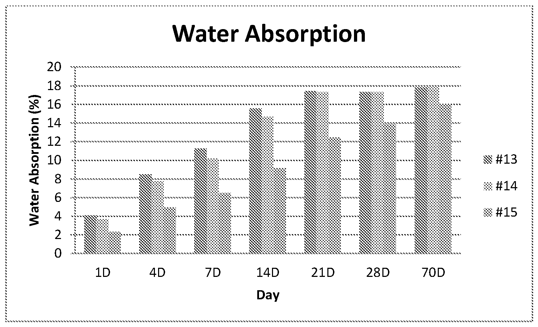

To conduct a water absorption test, the extruded samples were cut into 3 inch long segments. The samples were placed into a water batch at 50 °C. The weight gain was measured at 1 day, 4 days, 7 days, 14 days, 21 days, 28 days and 70 days. The Figure is a graph showing the results of the water absorption test.

Example 15 showed 30% improvement in MOR and a 40% reduction in water absorption at 7 days and 14 days compared to Example 13. The control group (Example 13) was saturated in 21 days. However, after 70 days, water absorption of Example 15 was still increased.

### Examples 16-19: Ethylene diamine containing additive

The formulations were extruded using a Leistritz 27mm twin screw extruder. Temperature profiles, feed rate, and screw speed were set for 170°C in all 9 Zones, 5kg/hr and 80RPM, respectively. All extruded samples were cut and crystallized overnight for the flex test. To evaluate flex properties of WPC samples, three point bending test was performed using an Instron (Instron 4201). Span distance and head speed were 2 inch and 0.5 inch/min, respectively. The amounts given in Table 9 are parts by weight. Examples 16 was used as a control and Example 17 is comparative.

**Table 9**

| **WPC Formulations** | | | | |
|---|---|---|---|---|
| | Examples | | | |
| Components | Control 16 | 17 | 18 | 19 |
| Wood flour | 50 | 50 | 50 | 50 |
| Recycled polyolefin | 32 | 32 | 31 | 30 |
| Inorganic filler | 15 | 15 | 15 | 15 |
| Metal Lubricant | 3 | 2.82 | 2.26 | 2.83 |
| Maleic anhydride grafted polyolefin | | | 1.33 | 1.67 |
| Organosilane + Dicumyl peroxide | | 0.11 | 0.09 | 0.12 |
| Ethylene diamine | | | 0.25 | 0.32 |

**Table 10**

| **Test results** | | | | |
|---|---|---|---|---|
| Test | Ex. 16 | Ex. 17 | Ex. 18 | Ex. 19 |
| Load @ yield (lb) | 36.8 | 40.8 | 48.4 | 48.9 |
| Modulus of Rupture (MOR, psi) | 4002 | 4376 | 5062 | 5093 |
| Modulus of Elongation (MOE, psi) | 574000 | 562000 | 575000 | 582000 |

As can be seen in Table 10, MOR of Examples 18 and 19 showed an enhancement of 26% and 27%, respectively, compared to Control Example 16.

## Claims

1. An additive system for wood polymer composites comprising:
at least one maleic anhydride grafted polymer coupling agent;
at least one second coupling agent selected from among silane and siloxane;
at least one peroxide crosslinking agent; and
an amine compound.

2. The additive system of claim 1, wherein the maleic anhydride grafted polymer is a maleic anhydride grafted polyolefin.

3. The additive system of claim 1, wherein the polymer of the maleic anhydride grafted polymer is selected from the group consisting of polystyrene copolymers, polyvinyl chloride, polyacrylate, polyurethane, ethylene vinyl acetate, polyester, styrene-ethylene-butylene-styrene (SEBS), ethylene propylene diene monomer (EPDM), and copolymers thereof.

4. The additive system of any one of the preceding claims, wherein the amine compound is selected from the group consisting of amine functionalized compounds, aliphatic amines, aromatic amines, aliphatic diamines, aromatic diamines, primary amines, secondary amines and tertiary amines.

5. The additive system of any one of the preceding claims, wherein the amine compound is selected from the group consisting of ethylenediamine, diethylenetriamine, trimethylenediamine, tetramethylenediamine, triethylene tetramine, tris(2-aminoethyl)amine, triethylenetetramine, pentamethylenediamine, hexamethyldiamine, heptamethylenediamine, octamethylenediamine, nonamethylenediamine, dodecamethylenediamine, undecanediamine, aminoethylpiperazine, N,N'-Bis-(2-aminoethyl)piperazine), N-[(2-Aminoethyl)2-aminoethyl]piperazine), piperazinoethylethylenediamine, polyethyleneamine, melamine (2,4,6-triamino-1,3,5-triazine), urea, amine functionalized silane and siloxane, fatty amines, and combinations of two or more thereof.

6. The additive system of any one of the preceding claims, wherein the second coupling agent is selected from the group consisting of amino silane, epoxy silane, vinyl silane, methacryloxy silane, mercaptosilane, vinyl terminated polyalkylsiloxane, vinyl terminated polyarylsiloxane, polyalkyl siloxane, and polyarylsiloxane.

7. A wood polymer composite comprising:
at least one thermoplastic polymer;
a cellulosic fiber material; and
the additive system claim 1.

8. The wood polymer composite of claim 7, wherein the thermoplastic polymer is selected from polyamides, polyesters, polystyrenes, polycarbonates, polyolefins, polyvinyl chloride, polyurethanes, and polyethers.

9. The wood polymer composite of claim 7, wherein the thermoplastic polymer comprises recycled polymeric material.

10. The wood polymer composite of any one of claims 7 to 9, wherein the composite further comprises at least one lubricant,
optionally wherein the lubricant is selected from among polymer waxes, zinc stearate, calcium stearate, magnesium stearate, potassium stearate, sodium stearate, ethylene bis stearamide, ethylene bis cocoamide, olemide, erucamide, steramide, ethylene bis lauramide, pentaerythiritol adipate stearate, and mixtures of two or more thereof; or wherein the lubricant is a solid lubricant selected from among graphene, graphite and boron.

11. The wood polymer composite of any one of claims 7 to 10, further comprising at least one organic filler, optionally wherein the at least one inorganic filler is selected from among talc, calcium carbonate, potassium carbonate, barium sulfate, zeolite, fly ash, clay, zinc borate, sodium borate, sodium tetraborate, glass fiber and carbon fiber.

12. The wood polymer composite of claim 7, wherein the composite comprises:
20-80% by weight of the at least one thermoplastic polymer;
20-80% by weight of cellulosic material; and
0.1-10% by weight of the additive system.

13. The wood polymer composite of claim 7, wherein the composite comprises:
20-75% by weight of the at least one thermoplastic polymer;
20-75% by weight of cellulosic material;
0.2-10% by weight of the at least one lubricant; and
0.1-10% by weight of the additive system.

14. A formed article comprising the wood polymer composite of any one of claims 7 to 13.

15. A method of making a wood polymer composite article, the method comprising providing the additive system of any one of claims 1 to 6, melt mixing a cellulosic material, at least one thermoplastic polymeric material and the additive system at a temperature sufficient to flow the thermoplastic polymeric material, and extruding through a die the wood polymer composite.

## Patentansprüche

1. Additivsystem für Holz-Polymer-Verbundwerkstoffe, umfassend:
mindestens einen mit Maleinsäureanhydrid gepfropftem Polymer-Haftvermittler;
mindestens einen zweiten Haftvermittler, ausgewählt aus Silan und Siloxan;
mindestens ein Peroxid-Vernetzungsmittel; und
eine Aminverbindung.

2. Additivsystem nach Anspruch 1, wobei das mit Maleinsäureanhydrid gepfropfte Polymer ein mit Maleinsäureanhydrid gepfropftes Polyolefin ist.

3. Additivsystem nach Anspruch 1, wobei das Polymer des mit Maleinsäureanhydrid gepfropften Polymers ausgewählt ist aus der Gruppe bestehend aus Polystyrol-Copolymeren, Polyvinylchlorid, Polyacrylat, Polyurethan, Ethylenvinylacetat, Polyester, Styrol-Ethylen-Butylen-Styrol (SEBS), Ethylen-Propylen-Dien-Monomer (EPDM) und Copolymere davon.

4. Additivsystem nach einem der vorhergehenden Ansprüche, wobei die Aminverbindung aus der Gruppe bestehend aus aminfunktionalisierten Verbindungen, aliphatischen Aminen, aromatischen Aminen, aliphatischen Diaminen, aromatischen Diaminen, primären Aminen, sekundären Aminen und tertiären Aminen ausgewählt ist.

5. Additivsystem nach einem der vorhergehenden Ansprüche, wobei die Aminverbindung aus der Gruppe bestehend aus Ethylendiamin, Diethylentriamin, Trimethylendiamin, Tetramethylendiamin, Triethylentetramin, Tris(2-aminoethyl)amin, Triethylentetramin, Pentamethylendiamin, Hexamethyldiamin, Heptamethylendiamin, Octamethylendiamin, Nonamethylendiamin, Dodecamethylendiamin, Undecandiamin, Aminoethylpiperazin, N,N'-Bis-(2-aminoethyl)piperazin), N-[(2-Aminoethyl)2-aminoethyl]piperazin), Piperazinoethylethylendiamin, Polyethylenamin, Melamin (2,4,6-Triamino-1,3,5-triazin), Harnstoff, aminfunktionalisiertem Silan und Siloxan, Fettaminen und Kombinationen von zwei oder mehreren davon ausgewählt ist.

6. Additivsystem nach einem der vorhergehenden Ansprüche, wobei der zweite Haftvermittler aus der Gruppe bestehend aus Aminosilan, Epoxysilan, Vinylsilan, Methacryloxysilan, Mercaptosilan, vinylterminiertem Polyalkylsiloxan, vinylterminiertem Polyarylsiloxan, Polyalkylsiloxan und Polyarylsiloxan ausgewählt ist.

7. Holz-Polymer-Verbundwerkstoff, umfassend:
mindestens ein thermoplastisches Polymer;
ein Zellulosefasermaterial; und
das Additivsystem nach Anspruch 1.

8. Holz-Polymer-Verbundwerkstoff nach Anspruch 7, wobei das thermoplastische Polymer aus Polyamiden, Polyestern, Polystyrolen, Polycarbonaten, Polyolefinen, Polyvinylchlorid, Polyurethanen und Polyethern ausgewählt ist.

9. Holz-Polymer-Verbundwerkstoff nach Anspruch 7, wobei das thermoplastische Polymer recyceltes Polymermaterial umfasst.

10. Holz-Polymer-Verbundwerkstoff nach einem der Ansprüche 7 bis 9, wobei der Verbundwerkstoff ferner mindestens ein Schmiermittel umfasst,
wobei das Gleitmittel optional aus Polymerwachsen, Zinkstearat, Calciumstearat, Magnesiumstearat, Kaliumstearat, Natriumstearat, Ethylenbisstearamid, Ethylenbiskokosamid, Olemid, Erucamid, Steramid, Ethylenbislauramid, Pentaerythiritoladipatstearat und Mischungen von zwei oder mehreren davon ausgewählt ist; oder wobei das Schmiermittel ein festes Schmiermittel ausgewählt aus Graphen, Graphit und Bor ist.

11. Holz-Polymer-Verbundwerkstoff nach einem der Ansprüche 7 bis 10, ferner umfassend mindestens einen organischen Füllstoff, wobei der mindestens eine anorganische Füllstoff optional aus Talk, Calciumcarbonat, Kaliumcarbonat, Bariumsulfat, Zeolith, Flugasche, Ton, Zinkborat, Natriumborat, Natriumtetraborat, Glasfaser und Kohlenstofffaser ausgewählt ist.

12. Holz-Polymer-Verbundwerkstoff nach Anspruch 7, wobei der Verbundwerkstoff Folgendes umfasst:
20-80 Gew.-% des mindestens einen thermoplastischen Polymers;
20-80 Gew.-% Zellulosematerial; und
0,1-10 Gew.-% des Additivsystems.

13. Holz-Polymer-Verbundwerkstoff nach Anspruch 7, wobei der Verbundwerkstoff Folgendes umfasst:
20-75 Gew.-% des mindestens einen thermoplastischen Polymers;
20-75 Gew.-% Zellulosematerial;
0,2-10 Gew.-% des mindestens einen Schmiermittels; und
0,1-10 Gew.-% des Additivsystems.

14. Ausgebildeter Artikel, umfassend den Holz-Polymer-Verbundwerkstoff nach einem der Ansprüche 7 bis 13.

15. Verfahren zum Herstellen eines Holz-Polymer-Verbundwerkstoffartikels, wobei das Verfahren Bereitstellen des Additivsystems nach einem der Ansprüche 1 bis 6, Schmelzmischen eines Zellulosematerials, mindestens eines thermoplastischen Polymermaterials und des Additivsystems bei einer Temperatur umfasst, die ausreicht, um das thermoplastische Polymermaterial fließen zu lassen, und Extrudieren des Holz-Polymer-Verbundwerkstoffs durch eine Düse.

## Revendications

1. Système d'additifs pour composites de polymère et bois comprenant :
au moins un agent de couplage polymère greffé d'anhydride maléique ;
au moins un second agent de couplage choisi parmi un silane et un siloxane ;
au moins un agent de réticulation peroxyde ; et
un composé amine.

2. Système d'additifs selon la revendication 1, dans lequel le polymère greffé d'anhydride maléique est une polyoléfine greffée d'anhydride maléique.

3. Système d'additifs selon la revendication 1, dans lequel le polymère du polymère greffé d'anhydride maléique est choisi dans le groupe constitué par les copolymères de polystyrène, le poly(chlorure de vinyle), le polyacrylate, le polyuréthane, l'éthylène-acétate de vinyle, le polyester, le styrène-éthylène-butylène-styrène (SEBS), le monomère éthylène-propylène-diène (EPDM), et des copolymères de ceux-ci.

4. Système d'additifs selon l'une quelconque des revendications précédentes, dans lequel le composé amine est choisi dans le groupe constitué par les composés à fonction amine, les amines aliphatiques, les amines aromatiques, les diamines aliphatiques, les diamines aromatiques, les amines primaires, les amines secondaires et les amines tertiaires.

5. Système d'additifs selon l'une quelconque des revendications précédentes, dans lequel le composé amine est choisi dans le groupe constitué par l'éthylènediamine, la diéthylènetriamine, la triméthylènediamine, la tétraméthylènediamine, la triéthylènetétramine, la tris(2-aminoéthyl)amine, la triéthylènetétramine, la pentaméthylènediamine, l'hexaméthyldiamine, l'heptaméthylènediamine, l'octaméthylènediamine, la nonaméthylènediamine, la dodécaméthylènediamine, l'undécanediamine, l'aminoéthylpipérazine, la N,N'-bis-(2-aminoéthyl)pipérazine), la N-[(2-aminoéthyl)2-aminoéthyl]pipérazine), la pipérazinoéthyléthylènediamine, la polyéthylèneamine, la mélamine (2,4,6-triamino-1,3,5-triazine), l'urée, un silane et un siloxane à fonction amine, les amines grasses et des combinaisons de deux de ceux-ci ou plus.

6. Système d'additifs selon l'une quelconque des revendications précédentes, dans lequel le second agent de couplage est choisi dans le groupe constitué par l'aminosilane, l'époxysilane, le vinylsilane, le méthacryloxysilane, le mercaptosilane, le polyalkylsiloxane à terminaison vinyle, le polyarylsiloxane à terminaison vinyle, le polyalkylsiloxane et le polyarylsiloxane.

7. Composite de polymère et bois comprenant :
au moins un polymère thermoplastique ;
un matériau fibreux cellulosique ; et
le système d'additifs selon la revendication 1.

8. Composite de polymère et bois selon la revendication 7, dans lequel le polymère thermoplastique est choisi parmi les polyamides, les polyesters, les polystyrènes, les polycarbonates, les polyoléfines, le poly(chlorure de vinyle), les polyuréthanes et les polyéthers.

9. Composite polymère et bois selon la revendication 7, dans lequel le polymère thermoplastique comprend un matériau polymère recyclé.

10. Composite polymère et bois selon l'une quelconque des revendications 7 à 9, dans lequel le composite comprend en outre au moins un lubrifiant,
éventuellement dans lequel le lubrifiant est choisi parmi les cires polymères, le stéarate de zinc, le stéarate de calcium, le stéarate de magnésium, le stéarate de potassium, le stéarate de sodium, l'éthylènebis-stéaramide, l'éthylènebis-cocoamide, l'olémide, l'érucamide, le stéramide, l'éthylènebis-lauramide, l'adipate-stéarate de pentaérythiritol et des mélanges de deux d'entre eux ou plus ; ou dans lequel le lubrifiant est un lubrifiant solide choisi parmi le graphène, le graphite et le bore.

11. Composite de polymère et bois selon l'une quelconque des revendications 7 à 10, comprenant en outre au moins une charge organique, éventuellement dans lequel l'au moins une charge inorganique est choisie parmi le talc, le carbonate de calcium, le carbonate de potassium, le sulfate de baryum, la zéolite, la cendre volante, l'argile, le borate de zinc, le borate de sodium, le tétraborate de sodium, la fibre de verre et la fibre de carbone.

12. Composite polymère et bois selon la revendication 7, dans lequel le composite comprend :
20 à 80 % en poids de l'au moins un polymère thermoplastique ;
20 à 80 % en poids de matière cellulosique ; et
0,1 à 10 % en poids du système d'additifs.

13. Composite polymère et bois selon la revendication 7, dans lequel le composite comprend :
20 à 75 % en poids de l'au moins un polymère thermoplastique ;
20 à 75 % en poids de matière cellulosique ;
0,2 à 10 % en poids de l'au moins un lubrifiant ; et
0,1 à 10 % en poids du système d'additifs.

14. Article formé comprenant le composite polymère et bois selon l'une quelconque des revendications 7 à 13.

15. Procédé de fabrication d'un article composite polymère et bois, le procédé comprenant la fourniture du système d'additifs selon l'une quelconque des revendications 1 à 6, le mélange à l'état fondu d'un matériau cellulosique, d'au moins un matériau polymère thermoplastique et du système d'additifs à une température suffisante pour faire couler le matériau polymère thermoplastique et l'extrusion à travers une filière du composite polymère et bois.
